# EUROPEAN PATENT APPLICATION

(11) **EP 4 640 356 A1**
(43) Date of publication of application: **29.10.2025**
(21) Application number: 25171232.9
(22) Date of filing: 17.04.2025
(51) Int. Cl.: B23K 9/133

(54) **WELDING WIRE FEED APPARATUS**

(30) Priority: 22.04.2024 JP 2024068837
(71) Applicant: DAIHEN Corporation, Yodogawa-ku Osaka-shi, Osaka 532-8512 (JP)
(72) Inventor: TANIGUCHI, Yusuke, Osaka-shi, Osaka, 532-8512 (JP)
(74) Representative: Hoffmann Eitle

(57) **Abstract**

This welding wire feed apparatus includes a main body portion (100) provided such that a welding wire 4 can be inserted therethrough and a welding wire feed mechanism (M1) that abuts on the welding wire (4) and feeds the welding wire (4) to a portion to be welded. The main body portion (100) includes an accommodation region (R1) where the welding wire feed mechanism (M1) is accommodated. The accommodation region (R1) is provided with a flat bottom surface (111). The welding wire feed mechanism (M1) is placed on the bottom surface (111). This welding wire feed apparatus can facilitate cleaning around a drive roller and a pressurization roller, replacement of a component, and other maintenance works.

## Description

### CROSS REFERENCE TO RELATED APPLICATIONS

This nonprovisional application is based on Japanese Patent Application No. 2024-068837 filed with the Japan Patent Office on April 22, 2024, the entire contents of which are hereby incorporated by reference.

### BACKGROUND OF THE INVENTION

### Field of the Invention

The present invention relates to a welding wire feed apparatus.

### Description of the Background Art

In welding with a robot hand, in order to feed a welding wire to a portion to be welded, a welding wire feed apparatus to which a welding nozzle is attached on a tip end side is used.

Japanese Patent Laying Open No. 2023-093903, Japanese Patent Laying Open No. 2023-093902, Japanese Patent Laying Open No. 2023-093901, and the like disclose such a welding wire feed apparatus.

### SUMMARY OF THE INVENTION

In the welding wire feed apparatus described above, in order to send the welding wire toward the welding nozzle, a drive roller and a pressurization roller that sandwich the welding wire therebetween are provided. In feed of the welding wire, a surface of the welding wire is ground by surfaces of the drive roller and the pressurization roller, and chips of the welding wire are accumulated around the roller and the pressurization roller. Accumulated chips of the welding wire should regularly be removed/cleaned. A structure around the roller and the pressurization roller, however, is in a complicated shape including projections and recesses, which makes reach by an operator's hand or a cleaning tool difficult.

In replacement of a component in maintenance as well, on the other hand, handling of a replacement tool is difficult when the structure around the drive roller and the pressurization roller is complicated.

This disclosure was made to solve problems above, and an object thereof is to provide a welding wire feed apparatus configured to facilitate cleaning around a drive roller and a pressurization roller, replacement of a component, and other maintenance works.
[1] A welding wire feed apparatus in the present disclosure is a welding wire feed apparatus that feeds a welding wire to a portion to be welded, and includes a main body portion provided such that the welding wire can be inserted therethrough and a welding wire feed mechanism that abuts on the welding wire and feeds the welding wire to the portion to be welded. The main body portion includes an accommodation region where the welding wire feed mechanism is accommodated. The accommodation region is provided with a flat bottom surface. The welding wire feed mechanism is placed on the bottom surface.
[2]: In the welding wire feed apparatus described in [1], the accommodation region includes a first wall located on an upstream side in a direction of feed of the welding wire and a second wall located on a downstream side in the direction of feed of the welding wire, the first wall and the second wall being arranged at a prescribed distance from the bottom surface in the direction of feed of the welding wire, and in a direction intersecting with the direction of feed of the welding wire, the bottom surface opens to the outside.
[3]: In the welding wire feed apparatus described in [2], the accommodation region includes a cover that covers the accommodation region, the cover has a central axis on a side of the first wall, the central axis extending in the direction intersecting with the direction of feed of the welding wire, and the cover can be opened and closed around the central axis.
[4]: In the welding wire feed apparatus described in [3], an inclined wall that extends in the direction intersecting with the direction of feed of the welding wire is provided between the bottom surface and the first wall, and the cover is provided with an inclined side to be located along the inclined wall while the cover closes the accommodation region.
[5]: In the welding wire feed apparatus described in any one of [1] to [4], the welding wire feed mechanism includes a drive roller that abuts on the welding wire and a pressurization roller that sandwiches the welding wire together with the drive roller.

The foregoing and other objects, features, aspects, and advantages of this invention will become more apparent from the following detailed description of this invention when taken in conjunction with the accompanying drawings.

### BRIEF DESCRIPTION OF THE DRAWINGS

Fig. 1 is a diagram showing an overall configuration of a welding nozzle and a welding wire feed apparatus attached to a robot arm.
Fig. 2 is a perspective view showing the overall configuration of the welding wire feed apparatus in an embodiment.
Fig. 3 is a side view showing the overall configuration of the welding wire feed apparatus in the embodiment.
Fig. 4 is a side view of a state in which a cover in the embodiment is opened.
Fig. 5 is a first perspective view of the state in which the cover in the embodiment is opened.
Fig. 6 is a second perspective view of the state in which the cover in the embodiment is opened.
Fig. 7 is a perspective view showing an accommodation region of the welding wire feed apparatus in the embodiment.

### DESCRIPTION OF THE PREFERRED EMBODIMENTS

A welding wire feed apparatus in the present embodiment will be described below with reference to the drawings below. When the number, an amount, or the like is mentioned in an embodiment described below, the scope of the present invention is not necessarily limited to the number, the amount, or the like unless otherwise specified. The same or corresponding elements have the same reference characters allotted and redundant description may not be repeated. Combination of features in the embodiment as appropriate is originally intended.

### (Welding Wire Feed Apparatus 1)

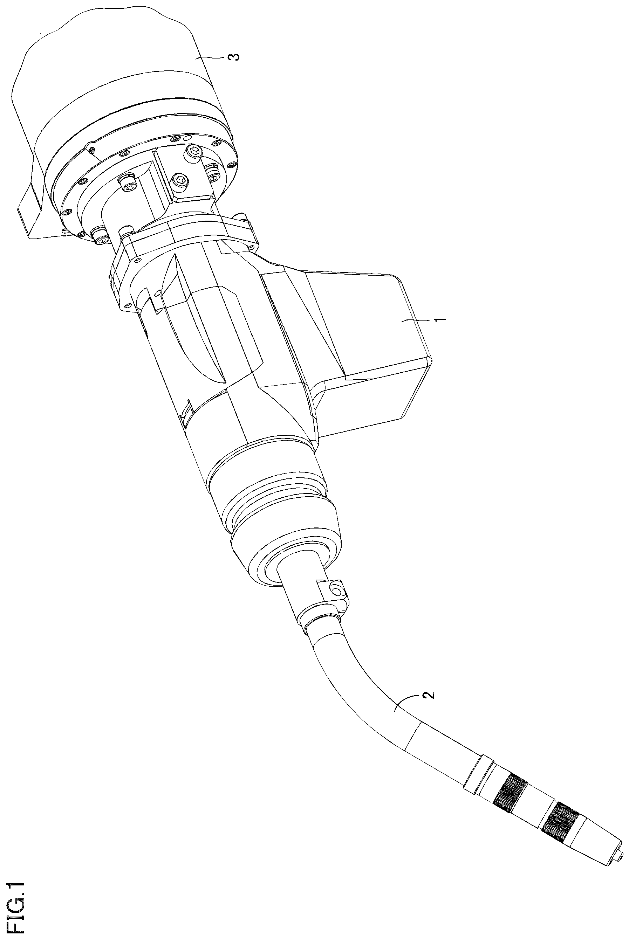

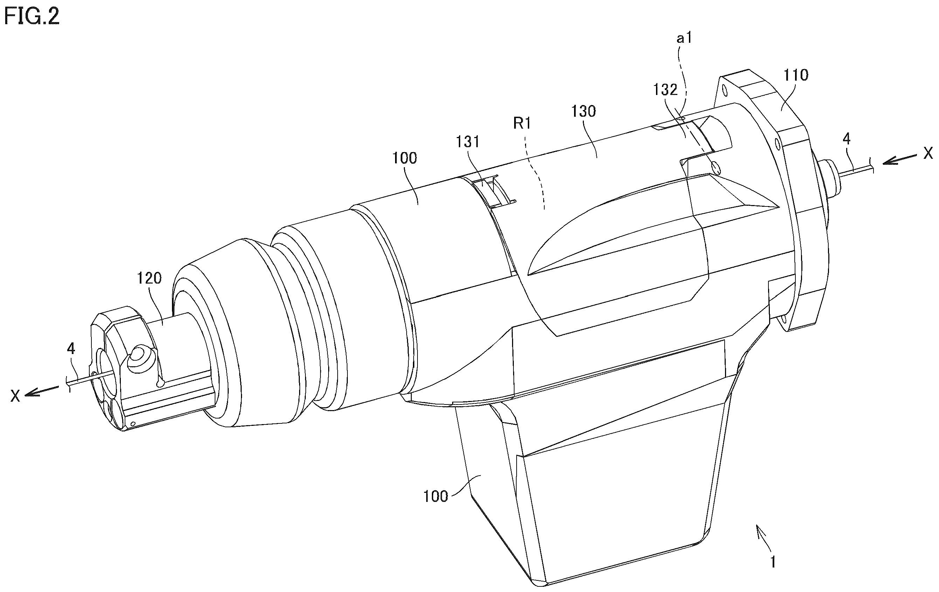

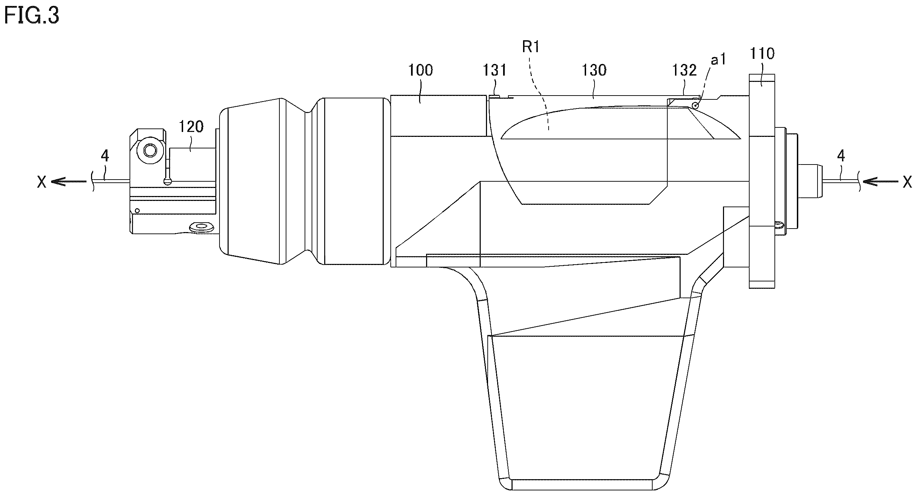

A welding wire feed apparatus 1 in the present embodiment will be described with reference to Figs. 1 to 3. Fig. 1 is a diagram showing an overall configuration of a welding nozzle 2 and welding wire feed apparatus 1 attached to a robot arm 3, Fig. 2 is a perspective view showing the overall configuration of welding wire feed apparatus 1, and Fig. 3 is a side view showing the overall configuration of welding wire feed apparatus 1. In the description below, an upstream side in a direction (X direction) of feed of welding wire 4 is referred to as a rear side and a downstream side is referred to as a front side. When the X direction is referred to as a front-rear direction, a direction intersecting with this front-rear direction may be referred to as a lateral direction.

Referring to Fig. 1, welding nozzle 2 that feeds the welding wire to a portion to be welded is attached to the front side of welding wire feed apparatus 1. Robot arm 3 is coupled to the rear side of welding wire feed apparatus 1.

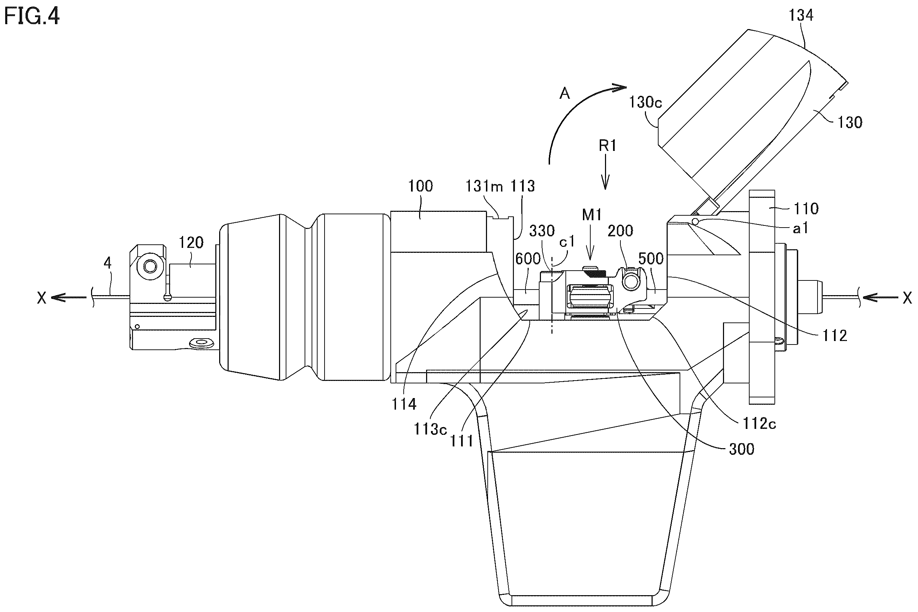

Referring to Figs. 2 and 3, welding wire feed apparatus 1 is an apparatus that feeds welding wire 4 to a portion to be welded. Welding wire feed apparatus 1 includes a main body portion 100 provided such that welding wire 4 can be inserted therethrough from the rear side toward a front end and an accommodation region R1 (see Fig. 4) where a welding wire feed mechanism that feeds welding wire 4 to the portion to be welded is accommodated.

On the front side of main body portion 100, a welding nozzle attachment portion 120 where welding nozzle 2 is to be attached is provided. On the rear side of main body portion 100, a robot arm attachment portion 110 to be coupled to robot arm 3 is provided.

Main body portion 100 includes a cover 130 that covers accommodation region R1. Cover 130 is provided with a cover pivotal support portion 132 on the rear side thereof, the cover pivotal support portion having a central axis a1 that extends in the direction intersecting with the direction of feed of welding wire 4. Cover 130 is provided to be opened and closed around central axis a1 with respect to main body portion 100. On the front side of cover 130, a locking portion 131 is provided between main body portion 100 and the cover. Cover 130 may be formed from a transparent member to allow external visual recognition of accommodation region R1 or from an opaque member not to allow external visual recognition of accommodation region R1.

By thus arranging central axis a1 of cover 130 on the rear side of cover 130, accommodation region R1 can widely open and lateral sides of a bottom surface 111 which will be described later can widely open to the outside.

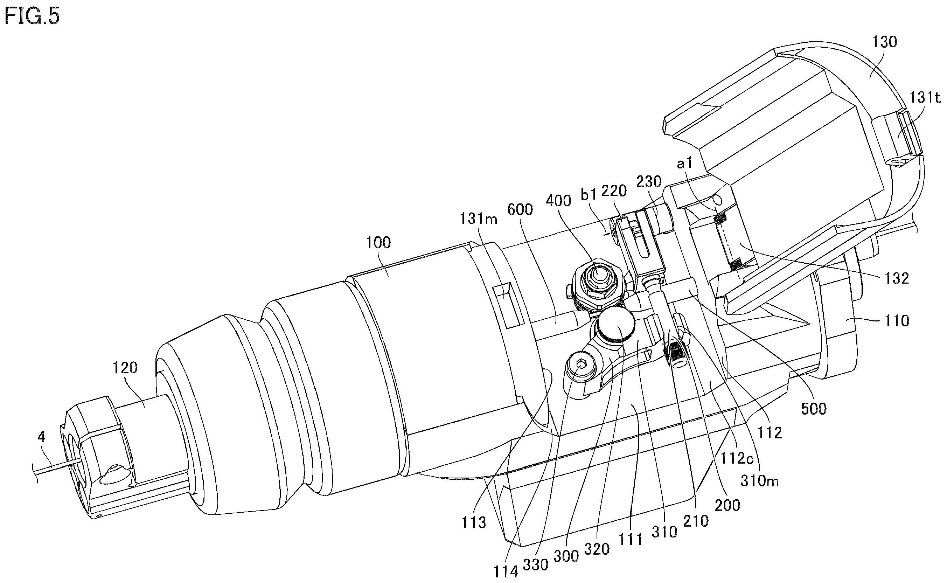

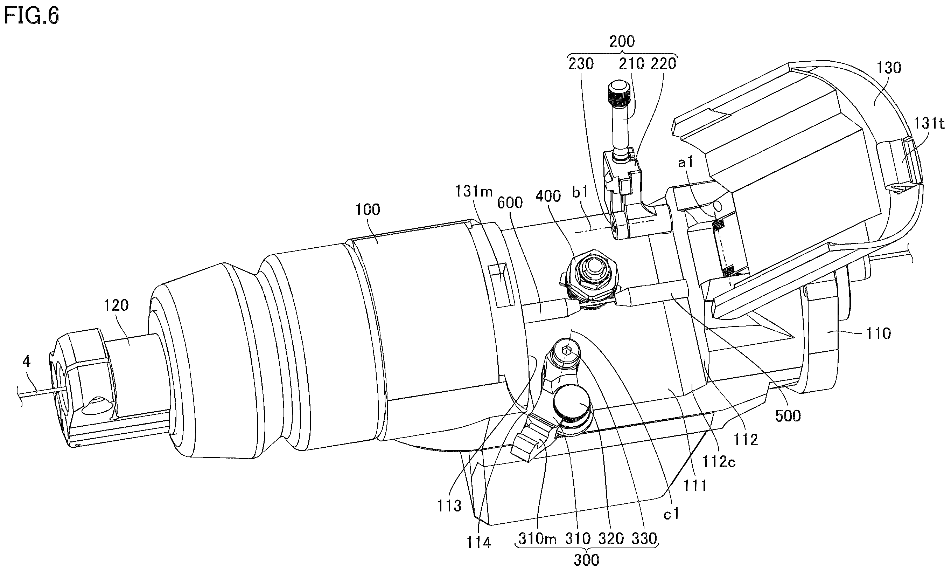

A state in which cover 130 is opened rearward with respect to main body portion 100 will be described with reference to Figs. 4 to 6. Fig. 4 is a side view of a state in which cover 130 is opened and Figs. 5 and 6 are first and second perspective views of the state in which cover 130 is opened.

Accommodation region R1 is provided with a flat bottom surface 111, and a welding wire feed mechanism M1 is placed on bottom surface 111.

Accommodation region R1 includes a first wall 112 located on the upstream side (rear side) in the X direction of feed of welding wire 4 and a second wall 113 located on the downstream side (front side) in the X direction of feed of welding wire 4, the first wall and the second wall being arranged at a prescribed distance from bottom surface 111 in the X direction of feed of welding wire 4. Bottom surface 111 is open to the outside in the lateral direction (a direction perpendicular to the sheet plane of Fig. 4) intersecting with the direction of feed of welding wire 4.

In a side view defined by bottom surface 111, first wall 112, and second wall 113, an accommodation region edge portion 114 of accommodation region R1 in a recessed shape and a cover edge portion 134 of cover 130 are provided to match with each other in shape. Thus, when cover 130 is closed with respect to main body portion 100, accommodation region R1 can completely be covered with cover 130.

Locking portion 131 provided between cover 130 and main body portion 100 locks cover 130 to main body portion 100 by engagement of a locking tab 131t provided in cover 130 with an engagement groove 131m provided in main body portion 100.

A first inclined wall 112c that extends in the direction intersecting with the X direction of feed of welding wire 4 is provided between bottom surface 111 and first wall 112. A second inclined wall 113c that extends in the direction intersecting with the X direction of feed of welding wire 4 is provided between bottom surface 111 and second wall 113.

An inclined side 130c to be located along first inclined wall 112c while cover 130 closes accommodation region R1 is provided in cover 130. By thus providing inclined side 130c in cover 130, when cover 130 is opened rearward (a direction shown with an arrow A in the figures) with respect to main body portion 100 as shown in Figs. 4 and 5, occurrence of a region that covers a region above accommodation region R1 can be prevented. Consequently, blocking by cover 130, of access by an operator to welding wire feed mechanism M1 provided in accommodation region R1 can be suppressed.

Welding wire feed mechanism M1 arranged on flat bottom surface 111 includes at least a drive roller 400 that abuts on welding wire 4 and a pressurization roller 320 that sandwiches welding wire 4 together with drive roller 400. Drive roller 400 is driven by a drive mechanism provided on bottom surface 111 and provided inside main body portion 100. Pressurization roller 320 is provided in a pressurization arm 300. Pressurization arm 300 includes a pivot arm 310. An arm rotational support shaft 330 that pivotably supports pivot arm 310 with respect to bottom surface 111 is provided on one end side of pivot arm 310. A support rotation axis c1 of arm rotational support shaft 330 stands in a direction perpendicular to bottom surface 111.

In a central portion of pivot arm 310, pressurization roller 320 described above is provided, and on a side opposite to arm rotational support shaft 330 of pivot arm 310 with pressurization roller 320 being interposed, a locking groove 310m is provided. This locking groove 310m is used to lock a state of welding wire 4 being sandwiched between pressurization roller 320 and drive roller 400.

A locking pin 200 including an adjustment screw 210 to be engaged with locking groove 310m is provided in first wall 112. Locking pin 200 includes adjustment screw 210 described above and a spring case 220 that applies elastic force in an axial direction of this adjustment screw 210. Spring case 220 is supported as being pivotable around a case rotational support portion 230 provided at first wall 112. A case rotation axis b1 is an axis that extends in a direction perpendicular to first wall 112 and it is identical to the X direction of feed of welding wire 4.

First wall 112 is provided with an inlet wire guide 500 and second wall 113 is provided with an outlet wire guide 600. Welding wire 4 is sent from inlet wire guide 500 toward outlet wire guide 600. Welding wire 4 is sandwiched between pressurization roller 320 and drive roller 400 in a region between inlet wire guide 500 and outlet wire guide 600.

Fig. 5 shows a state in which locking pin 200 has locked pressurization arm 300. Force with which pressurization roller 320 and drive roller 400 sandwich welding wire 4 can be varied by adjusting elastic force of a spring provided in spring case 220.

Fig. 6 shows a state in which locking pin 200 has unlocked pressurization arm 300. As adjustment screw 210 is pivoted around case rotation axis b1, adjustment screw 210 is released from locking groove 310m. Pivot arm 310 thus becomes pivotable around support rotation axis c1 of arm rotational support shaft 330.

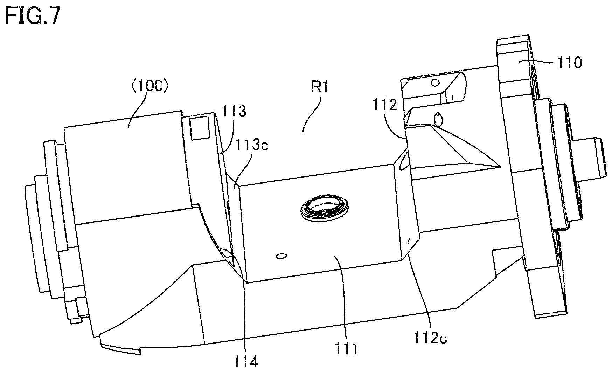

Accommodation region R1 provided in main body portion 100 will now be described with reference to Fig. 7. Fig. 7 is a perspective view showing accommodation region R1. As described above, accommodation region R1 is provided with flat bottom surface 111, and welding wire feed mechanism M1 is placed on bottom surface 111. Accommodation region R1 includes first wall 112 located on the upstream side (rear side) in the X direction of feed of welding wire 4 and second wall 113 located on the downstream side (front side) in the X direction of feed of welding wire 4, the first wall and the second wall being arranged at a prescribed distance from bottom surface 111 in the X direction of feed of welding wire 4. Bottom surface 111 is open to the outside in the direction (direction perpendicular to the sheet plane of Fig. 4) intersecting with the direction of feed of welding wire 4.

In maintenance of welding wire feed mechanism M1, accumulated chips of the welding wire should be removed/cleaned. By opening cover 130 rearward to a large extent, consequently, accommodation region R1 can widely be open and the lateral sides of bottom surface 111 can widely be open to the outside. Since bottom surface 111 is flat, chips of the welding wire can readily be removed. In replacement of a component in maintenance as well, handling of a replacement tool is facilitated, because welding wire feed mechanism M1 is formed from a simplified mechanism.

Thus, in welding wire feed apparatus 1, cleaning around welding wire feed mechanism M1 including the drive roller and the pressurization roller, replacement of a component, and other maintenance works can be facilitated.

Though an embodiment of the present invention has been described, it should be understood that the embodiment disclosed herein is illustrative and non-restrictive in every respect. The scope of the present invention is defined by the terms of the claims and is intended to include any modifications within the scope and meaning equivalent to the terms of the claims.

## Claims

1. A welding wire feed apparatus that feeds a welding wire (4) to a portion to be welded, the welding wire feed apparatus comprising:
a main body portion (100) provided such that the welding wire (4) can be inserted through the main body portion; and
a welding wire feed mechanism (M1) that abuts on the welding wire (4) and feeds the welding wire (4) to the portion to be welded, wherein
the main body portion (100) includes an accommodation region (R1) where the welding wire feed mechanism (M1) is accommodated,
the accommodation region (R1) is provided with a flat bottom surface (111), and
the welding wire feed mechanism (M1) is placed on the bottom surface (111).

2. The welding wire feed apparatus according to claim 1, wherein
the accommodation region (R1) includes a first wall (112) located on an upstream side in a direction of feed of the welding wire (4) and a second wall (113) located on a downstream side in the direction of feed of the welding wire (4), the first wall and the second wall being arranged at a prescribed distance from the bottom surface (111) in the direction of feed of the welding wire (4), and
in a direction intersecting with the direction of feed of the welding wire (4), the bottom surface (111) opens to outside.

3. The welding wire feed apparatus according to claim 2, wherein
the accommodation region (R1) includes a cover (130) that covers the accommodation region (R1),
the cover (130) has a central axis (a1) on a side of the first wall (112), the central axis extending in the direction intersecting with the direction of feed of the welding wire (4), and
the cover (130) can be opened and closed around the central axis (a1).

4. The welding wire feed apparatus according to claim 3, wherein
an inclined wall (112c) that extends in the direction intersecting with the direction of feed of the welding wire (4) is provided between the bottom surface (111) and the first wall (112), and
the cover (130) is provided with an inclined side (130c) to be located along the inclined wall (112c) while the cover (130) closes the accommodation region (R1).

5. The welding wire feed apparatus according to any one of the preceding claims, wherein
the welding wire feed mechanism (M1) includes a drive roller (400) that abuts on the welding wire (4) and a pressurization roller (320) that sandwiches the welding wire (4) together with the drive roller (400).
